# EUROPÄISCHE PATENTSCHRIFT

(11) **EP 0 504 098 B1**
(45) Veröffentlichungstag und Bekanntmachung des Hinweises auf die Patenterteilung: **19.04.1995**
(21) Anmeldenummer: 92810092.4
(22) Anmeldetag: 10.02.1992
(51) Int. Cl.: B65G 25/02, B21D 43/05

(54) **Transferanordnung an einer Presse**
Transfer arrangement on a press
Dispositif de transfert sur une presse

(30) Priorität: 15.03.1991 CH 792/91
(43) Veröffentlichungstag der Anmeldung: 16.09.1992
(73) Patentinhaber: STYNER & BIENZ AG, CH-3172 Niederwangen (CH)
(72) Erfinder: Lüthi, Rudolf, CH-3172 Niederwangen (CH)
(74) Vertreter: AMMANN PATENTANWAELTE AG BERN

(56) Entgegenhaltungen:
- DE-A- 3 329 900
- FR-A- 2 332 125
- US-A- 3 077 259

## Beschreibung

Die vorliegende Erfindung betrifft eine Transferanordnung an einer Presse zum schrittweisen Transport von Werkstücken durch Bearbeitungsstationen eines Werkzeuges, mit seitlich des Werkzeuges angeordneten Transportstangen, die mit Greifern für Werkstücke besetzt und zyklisch in Längs- und Querrichtung hin und her bewegbar sind. Die Transportstangen führen pro Arbeitszyklus eine geschlossene rechteckige Bewegung aus, indem sie in einem ersten Takt eine Anzahl erfasster Werkstücke zur nächsten Station des Werkzeuges vorschieben, dann seitlich vom Werkzeug entfernt, in Längsrichtung zurückgeführt und zum Erfassen der Werkstücke wieder zum Werkzeug hin bewegt werden. Es treten hierbei erhebliche Beschleunigungen und Verzögerungen und entsprechend hohe Massenkräfte aus, so dass die Arbeitskadenz der Presse durch die Festigkeit und Stabilität der Transferanordnung begrenzt ist. Verhältnismässig enge Grenzen sind deshalb gesetzt, weil jede Erhöhung der Festigkeit und mechanischen Stabilität der Transportstangen gegen Deformation zu einer Gewichtserhöhung führt, die ihrerseits eine Erhöhung der Massenkräfte bewirkt.

Um einen störungsfreien Transfer der Werkstücke sicherzustellen, wird der oben erwähnten horizontalen Transferbewegung noch eine vertikale Bewegung überlagert (siehe z.B. DE-A-3 329 900), indem die Transportstangen mit den Greifern jeweils nach dem Erfassen der Werkstücke etwas angehoben werden, damit die erfassten Werkstücke sicher in die nächste Station des Werkzeugs einlaufen können. Ohne diese Vertikalbewegung besteht die Gefahr, dass Werkstücke beim Einlaufen in eine nächste Station gegen Teile derselben anschlagen könnten.

Ziel vorliegender Erfindung ist es, die Transferanordnung erheblich zu vereinfachen, indem den Transportstangen eine leicht geneigte Bewegung erteilt wird. Die Vertikalkomponente dieser Bewegung kann dabei im Bereiche von 0,1 bis 1 mm liegen, was genügt, um jede Kollision zwischen Werkstücken und Werkzeugteilen zu vermeiden.

Hierbei ist es besonders vorteilhaft, eine Transferanordnung vorzusehen, die genügende Stabilität bei verhältnismässig geringem Gewicht aufweist und somit verhältnismässig hohe Arbeitskadenzen erlaubt. Es zeigt sich, dass an ihren Enden eingespannte und starr in Längs- und Querrichtung geführte Transportstangen besonders stabil sind gegen Verformung und somit vergleichsweise höheren Beschleunigungen ausgesetzt werden können. Als Transportstangen können vorzugsweise Hohlprofile, insbesondere quadratische Hohlprofile verwendet werden, die auch in Vertikalrichtung hohe Steifigkeit aufweisen.

Die Erfindung wird nun anhand eines in der Zeichnung dargestellten Ausführungsbeispiels näher erläutert.
Figur 1 ist eine Draufsicht auf den Pressentisch und die Transferanordnung,
Figur 2 ist eine Stirnansicht der Presse mit Teilen der Transferanordnung,
Figur 3 ist ein Teilschnitt nach Linie III-III in Figur 1 in grösserem Massstab,
Figur 4 zeigt einen Teil des Antriebs der Transferanordnung,
Figur 5 zeigt schematisch den Transfer eines Werkstücks und
Figur 6 zeigt die geneigten Führungen der Transportstangen.

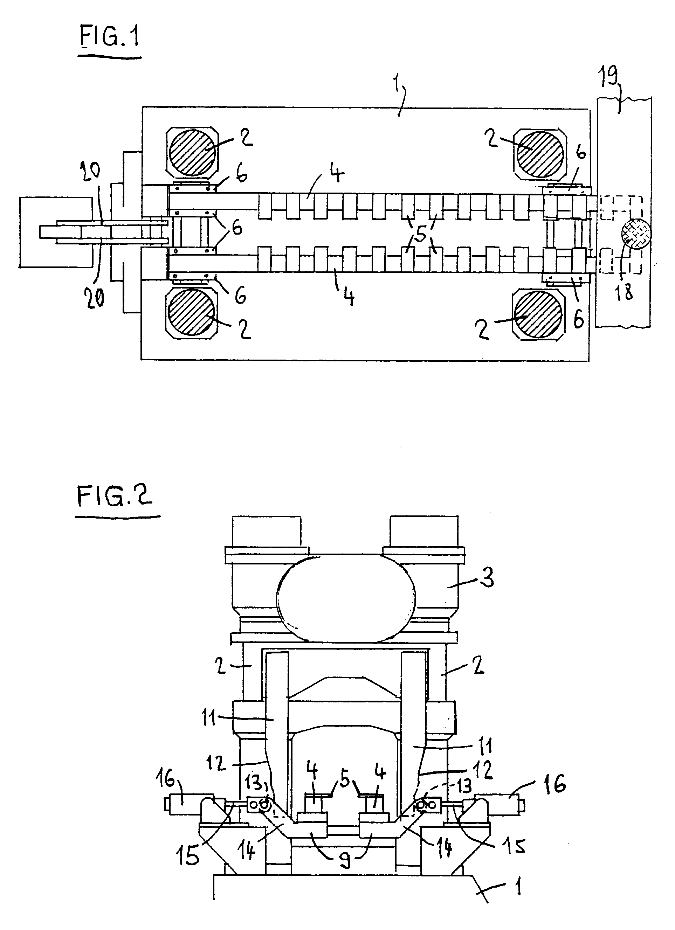

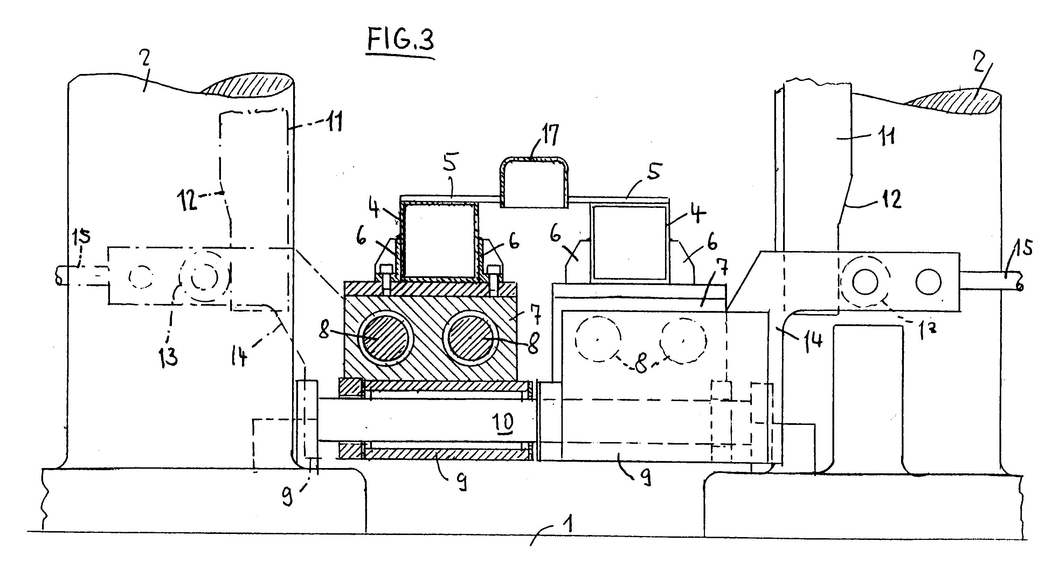

Die Figuren 1 und 2 zeigen mehr oder weniger schematisch einen Pressentisch 1, Führungssäulen 2 und einen Pressestössel 3. In üblicher Weise ist auf dem Tisch 1 der Unterteil und am Stössel 3 der Oberteil eines Transferwerkzeuges mit mehreren Bearbeitungsstationen befestigt. Dieses Werkzeug ist in den Figuren 1 - 4 und 6 zur Vereinfachung dargestellt. Beidseitig des Werkzeuges befindet sich je eine Transportstange 4 mit rein schematisch dargestellten Greifern 5 für Werkstücke. Wie insbesondere Figur 3 zeigt, bestehen die Transportstangen 4 aus quadratischen Hohlprofilen, die bezogen auf ihr Gewicht eine hohe Steifheit auf Biegung und Torsion aufweisen. Die Greifer 5 sind oben auf die Transportstangen 4 aufgesetzt, d.h. asymmetrisch zum Profil dieser Stangen angeordnet, so dass, wie bereits erwähnt, im Betrieb auf die Transportstangen 4 auch Torsionsbeanspruchungen wirken. Zwischen den Führungssäulen 2 beziehungsweise in Längsrichtung der Transportstangen 4 etwas ausserhalb der Führungssäulen sind die Enden dieser Transportstangen mit Befestigungswinkeln 6 verschweisst, die ihrerseits mit Längsschlitten 7 fest verschraubt sind. Diese Längsschlitten 7 (Figur3) sind starr längs zweier paralleler Führungsstangen 8 geführt, die in einem Querschlitten 9 befestigt sind, der längs zweier paralleler Führungsstangen 10 geführt ist. Die Enden der Transportstangen 4 sind somit starr eingespannt und geführt, was zusammen mit der hohen Steifigkeit der Führungsstangen selbst zu einer sehr hohen Stabilität d.h. geringen Verformungen der Führungsstangen unter den oben erwähnten Massenkräften führt. Es ist daher möglich, mit verhältnismässig sehr hohen Arbeitskadenzen von beispielsweise bis zu 300/min. zu arbeiten, ohne dass die Betriebssicherheit oder die Standzeit der Führungen und des Antriebs leiden. Wie in Figur 6 angedeutet, sind die Führungsstangen 8 leicht geneigt, derart, dass die Transportstangen 4 eine entsprechend geneigte Transportbewegung ausführen, was durch Pfeile 24 angedeutet ist.

Die Querbewegung der Transportstangen 4 wird gesteuert durch Steuerschienen 11, die am Pressestössel 3 montiert sind und mit ihren aussen liegenden Steuerkurven 12 auf Steuerrollen 13 von Fortsätzen 14 der Schlitten 9 wirken. Auf die Fortsätze 14 wirken auch die Kolbenstangen 15 von pneumatischen Zylindern 16. Es wirkt damit ein zuverlässiger konstanter Druck nach innen auf die Fortsätze 14, so dass die Steuerrollen 13 stets sicher an den Steuerkurven 12 der Steuerschienen 11 anliegen. Aus den Figuren 2 und 3 ist ersichtlich, dass bei der Abwärtsbewegung der Steuerschienen 11 mit dem Pressestössel 3 die Steuerrollen 13 und die damit verbundenen Teile, d.h. auch die Transportstangen 4, auswärtsgespreizt werden, so dass ein zwischen zwei gegenüberliegenden Haltern 5 geklemmtes Werkstück 17 freigegeben wird. Die Halter 5 werden dabei auch aus dem Bereich der beiden Werkzeugteile seitlich entfernt, so dass sich das Werkzeug zur Bearbeitung von Werkstücken in allen Stationen schliessen kann. In Figur 1 ist angedeutet, dass an einer bestimmten Stelle Rohlinge 18 aus einem querdurchlaufenden Band 19 ausgestanzt und von den äussersten Greifern der Transportschienen 4 übernommen wird.

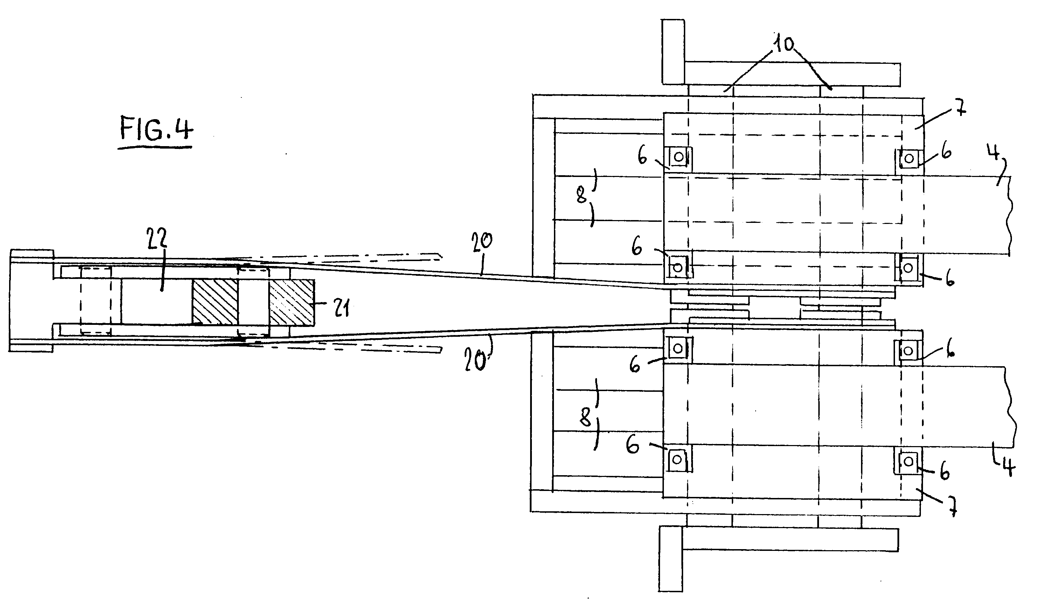

Der Längsantrieb der Transportstangen 4 erfolgt mittels zweier Blattfedern 20, die an der Innenseite der Längsschlitten 7 befestigt sind und die von einem Antriebshebel 21 über einen Kupplungshebel 22 angetrieben werden. Die Blattfedern 20 sind starr genug, um die Transportstangen 4 in Längsrichtung anzutreiben, sie können aber wie in Figur 4 angedeutet, den Querbewegungen der Transportstangen 4 folgen. Es sei noch darauf hingewiesen, dass das Ausführungsbeispiel des Längsantriebes gemäss Figur 4 etwas von dem rein schematisch in Figur 1 Dargestellten abweicht.

Wie bereits erwähnt, führen die beiden Transportstangen 4 im Betrieb sehr schnelle Bewegungen in Längs- und Querrichtung aus, wobei während der Querbewegungen in den Stangen erhebliche Massenkräfte auftreten, welche diese Stangen auf Biegung und Torsion beanspruchen. Dank der spielfreien und somit starren Führung der Stangenenden sind diese Stangenenden quasi starr eingespannt, erfahren also an und für sich keine Biegung bzw. Verschwenkung in ihrer Halterung. Es zeigt sich, dass damit die Durchbiegung der Transportstangen ganz erheblich reduziert werden kann. Dementsprechend sind erhebliche höhere Beanspruchungen, bzw. höhere Arbeitskadenzen bei gegebenen Anforderungen an die Präzision der jeweiligen Lage der Greifer für die Werkstücke möglich. Die hohe Steifigkeit bei geringem Gewicht der Transportstangen 4 trägt das ihre dazu bei, dass die ganze Anordnung ausserordentlich steif ist und somit hohe Arbeitskadenzen zulässt. Trotzdem halten sich die Massenkräfte in Grenzen, weil das Gesamtgewicht der bewegten Teile verhältnismässig gering ist.

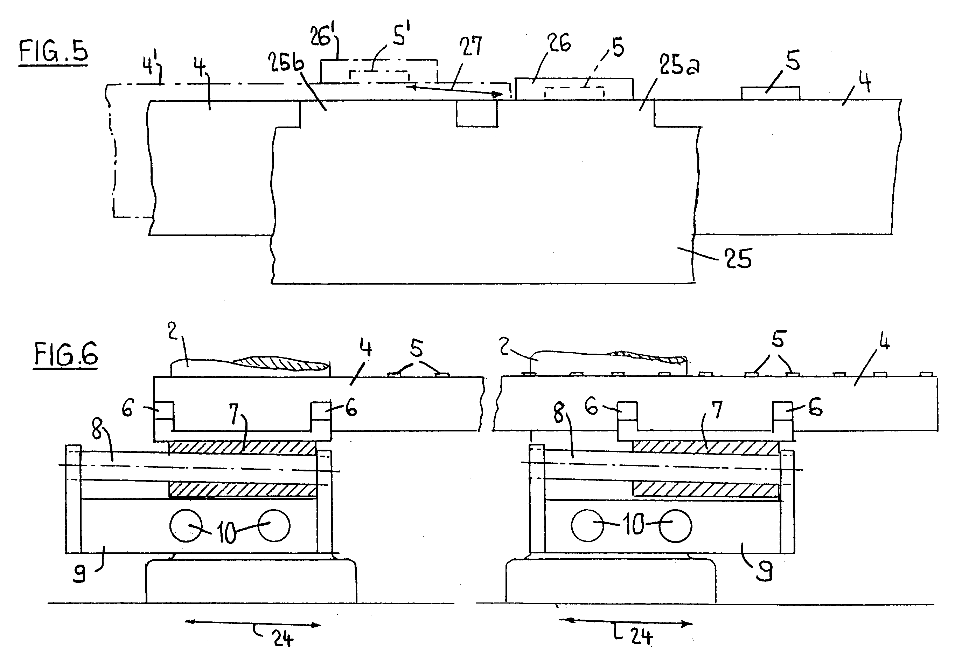

In Figur 5 ist die erfindungsgemässe Transferbewegung für ein Werkstück dargestellt. Es ist schematisch ein Abschnitt eines Werkzeug-Unterteils 25 mit zwei Bearbeitungsstationen 25a und 25b angedeutet. Ein Greifer 5 der Transportstange 4 erfasst in der Station 25a ein Werkstück 26 und transferiert es in der leicht geneigten Richtung des Pfeils 27 in die Station 25b, in welche es in leicht angehobener Position einläuft. Die Endstellung der Transportstange (4′), des Werkstücks (26′) und des Greifers (5′) sind in Figur 5 angedeutet. Es besteht hierbei keine Gefahr eines Anstossens des Werkstücks gegen Teile der Station 25b, und dies auch dank der hohen Stabilität und Schwingungsfreiheit des Transfersystems, welches eine genaue Beherrschung aller Bewegungen der Greifer, insbesondere auch der geringen Vertikalkomponente dieser Bewegung gestattet. Ein besonderer Vertikalantrieb für die Transportstangen fällt hierbei weg. Der Antrieb der Transportstangen 4 über die Blattfedern 20 gestattet Freiheit der Stangenbewegung in Horizontal- und Vertikalrichtung.

## Patentansprüche

1. Transferanordnung an einer Presse (1 - 3) zum schrittweisen Transport von Werkstücken (17) durch Bearbeitungsstationen eines Werkzeuges, mit seitlich des Werkzeuges angeordneten Transportstangen (4), die mit Greifern (5) für Werkstücke (17) besetzt und zyklisch in Längs- und Querrichtung hin- und herbewegbar sind, dadurch gekennzeichnet, dass die Transportstangen (4) durch eine ihrer längsbewegung simultan überlagerte Vertikalbewegung eine geneigte Bewegung ausführen, derart, dass Werkstücke (26) beim Transfer von einer Werkzeugstation (25a) zur nächsten (25b) angehoben werden.

2. Anordnung nach Anspruch 1, dadurch gekennzeichnet, dass die Transportstangen (4) an ihren Enden mittels geneigter Führungen (8) geführt sind.

3. Anordnung nach Anspruch 1 oder 2, dadurch gekennzeichnet, dass die Transportstangen (4) an ihren Enden eingespannt und starr in Längs- und Querrichtung geführt sind.

4. Anordnung nach einem der Ansprüche 1 bis 3, dadurch gekennzeichnet, dass die Transportstangen (4) Hohlprofile, vorzugsweise quadratische Hohlprofile sind.

5. Anordnung nach einem der Ansprüche 1 bis 4, dadurch gekennzeichnet, dass jedes Ende jeder Transportstange (4) mittels je zweier paralleler Führungen (7, 8; 9, 10) in Längs- und Querrichtung geführt ist.

6. Anordnung nach Anspruch 4 oder 5, dadurch gekennzeichnet, dass die Stangenführungen (7, 8; 9, 10) und die an den Transportstangen (4) angreifenden Antriebsorgane (20) zwischen den oder in Längsrichtung ausserhalb der Säulen (2) der Presse liegen.

7. Anordnung nach einem der Ansprüche 1 - 6, dadurch gekennzeichnet, dass die Transportstangen (4) durch mit dem Pressenstössel (3) bewegte Steuerkurven (11, 12) gegen den Druck von pneumatischen Zylindern (15, 16) spreizbar sind.

8. Anordnung nach einem der Ansprüche 1 - 7, dadurch gekennzeichnet, dass die Transportstangen (4) von einem gemeinsamen Antrieb über Blattfedern (20) in Längsrichtung angetrieben werden.

## Claims

1. Transfer device in a press (1 - 3), for the stepwise transport of workpieces (17) through the processing stations of a tool, comprising transport bars (4) which are disposed on the side of the tool and which are provided with grippers (5) for the workpieces (17) and are displaceable in the longitudinal and the transversal directions in a reciprocating, cyclic movement, characterised in that the transport bars (4), by means of a vertical movement which is simultaneously superimposed upon their longitudinal movement, perform an inclined movement in such a manner that the workpieces (26) are lifted up during their transfer from one station (25a) of the tool to the next one (25b).

2. Device according to claim 1, characterised in that the transport bars (4) are guided at their ends by means of inclined guidings (8).

3. Device according to claim 1 or 2, characterised in that the transport bars are constrained at their ends and rigidly guided in the longitudinal and transversal directions.

4. Device according to any one of claims 1 to 3, characterised in that the transport bars (4) are hollow profiles, preferably square hollow profiles.

5. Device according to any one of claims 1 to 4, characterised in that each end of each transport bar (4) is guided in the longitudinal and transversal directions by means of two respective parallel guidings (7, 8; 9, 10).

6. Device according to claim 4 or 5, characterised in that the bar guidings (7, 8; 9, 10) and the driving elements (20) acting upon the transport bars (4) are disposed between or longitudinally outside the columns (2) of the press.

7. Device according to any one of claims 1 to 6, characterised in that the transport bars (4) are capable of being spread apart against the pressure of pneumatic cylinders (15, 16) by control cams (11, 12) which are moved in conjunction with the press slide (3).

8. Device according to any one of claims 1 to 7, characterised in that the transport bars (4) are driven in the longitudinal direction through leaf springs (20) by a common drive.

## Revendications

1. Dispositif de transfert dans une presse (1 - 3) pour le transport par pas de pièces à usiner (17) à travers les stations d'usinage d'un outil, comprenant des barres de transport (4) disposées latéralement par rapport audit outil qui présentent des preneurs (5) pour les pièces à usiner (17) et sont capables d'être déplacées de manière alternative et cyclique dans la direction longitudinale et transversale, caractérisé en ce que les barres de transport (4) exécutent, par un mouvement vertical simultanément superposé à leur mouvement longitudinal, un mouvement incliné de telle manière que les pièces à usiner (26) sont soulevées lors du transfert d'une station de l'outil (25a) à la prochaine (25b).

2. Dispositif selon la revendication 1, caractérisé en ce que les barres de transport (4) sont guidées aux extrémités par des guidages inclinés (8).

3. Dispositif selon la revendication 1 ou 2, caractérisé en ce que les barres de transport (4) sont contraintes aux extrémités et sont rigidement guidées dans la direction longitudinale et transversale.

4. Dispositif selon l'une quelconque des revendications 1 à 3, caractérisé en ce que les barres de transport (4) sont des profilés creux, de préférence des profilés creux carrés.

5. Dispositif selon l'une quelconque des revendications 1 à 4, caractérisé en ce que chaque extrémité de chaque barre de transport (4) est guidée chaque fois par deux guidages (7, 8; 9, 10) dans la direction longitudinale et transversale.

6. Dispositif selon la revendication 4 ou 5, caractérisé en ce que les guidages (7, 8; 9, 10) des barres ainsi que les éléments d'entraînement (20) agissant sur les barres de transport (4) sont disposés entre les colonnes (2) de la presse ou longitudinalement à l'extérieur de ces dernières.

7. Dispositif selon l'une quelconque des revendications 1 à 6, caractérisé en ce que les barres de transport (4) sont capables d'être écartées contre la pression de cylindres pneumatiques (15, 16) par des cames de commande (11, 12) déplacées conjointement au coulisseau (3) de la presse.

8. Dispositif selon l'une quelconque des revendications 1 à 7, caractérisée en ce que les barres de transport (4) sont entraînées dans la direction longitudinale par un entraînement commun au moyen de ressorts à lames.
